# EUROPÄISCHE PATENTSCHRIFT

(11) **EP 1 216 939 B1**
(45) Veröffentlichungstag und Bekanntmachung des Hinweises auf die Patenterteilung: **05.11.2003**
(21) Anmeldenummer: 01811183.1
(22) Anmeldetag: 05.12.2001
(51) Int. Cl.: B65G 47/51, B65G 47/84

(54) **Vorrichtung zum Fördern und Zwischenspeichern von Produkten**
Device for conveying objects and including an accumulating buffer
Dispositif de transport d'objets comprenant une réserve d'accumulation

(30) Priorität: 22.12.2000 CH 25032000
(43) Veröffentlichungstag der Anmeldung: 26.06.2002
(73) Patentinhaber: SIG Pack Systems AG, 8222 Beringen (CH)
(72) Erfinder: Wipf, Alfred, 79798 Jestetten (DE); Lenherr, Harald, 8222 Beringen (CH); Frulio, Ralf, 79798 Jestetten (DE)
(74) Vertreter: Clerc, Natalia

(56) Entgegenhaltungen:
- CH-A- 688 090
- US-A- 5 263 568

## Beschreibung

Eine Transportvorrichtung mit einem Karussell ist aus der DE-A 42 09 774 bekannt. Die Karussellanordnung nimmt einzelne Gegenstände von einem Eingangsförderer ab und fördert diese entlang einem im wesentlichen bogenförmigen Weg zu einem Ausgangsförderer. Der Ausgangsförderer ist so ausgestaltet, dass er die Gegenstände in Gruppen fördert, die jeweils eine festgelegte Anzahl von Gegenständen enthalten. Die Mitnehmer der Karussellanordnung geben die Gegenstände vorzugsweise frei, bevor sie den Ausgangsförderer erreichen, so dass die Gegenstände sich unmittelbar stromaufwärts von dem Ausgangsförderer gruppieren.

Der vorliegenden Erfindung liegt die Aufgabe zugrunde, eine Transportvorrichtung zu schaffen, die eine effiziente Speicherfunktion bei einem Start- und Anfahrvorgang einer anschliessenden Maschine, z.B. einer Zweitverpackungsmaschine, mit einem Schliessen allfälliger Lücken bei den zugelieferten Produkten verbindet. Diese Aufgabe wird durch die Merkmalskombination der Ansprüche gelöst.

Nachfolgend werden Ausführungsbeispiele der Erfindung anhand der Zeichnung erläutert. Darin zeigt:
- Fig. 1 und 2: perspektivische, schematische Ansichten einer ersten Ausführungsform,
- Fig. 3: eine perspektivische Ansicht einer zweiten Ausführungsform, und
- Fig. 4: eine Draufsicht auf eine dritte Ausführungsform.

Auf einem horizontalen Eingangsförderband 1 werden längliche Produkte 2, z.B. verpackte Schokoladeriegel, in regelmässigen Abständen mit ihrer Längserstreckung in Transportrichtung angeliefert. Gelegentlich kommt es vor, dass ein Produkt 2 aus der Kolonne fehlt, was an der Stelle 2a angedeutet ist, z.B. weil es an einer Prüfstation ausgeschieden wurde.

Eine Karusselleinrichtung 3 hat einen um eine vertikale Achse 4 drehbaren Rotor 5 mit einer Vielzahl von in regelmässigem Winkelabstand radial abstehenden Armen 6. Am freien Ende jedes Arms 6 ist eine Greifeinrichtung 7 angebracht. Die Greifeinrichtung 7 umfasst einen Aktuator 8, der einen als Saugrohr ausgebildeten Greifer 9 betätigt. Der Greifer 9 ist durch den Aktuator 8 von einer angehobenen über eine Zwischenstellung in eine abgesenkte Stellung axial bewegbar und um seine Achse um 90° schwenkbar. Jedes Vakuumventil zu den Greifern 9 ist individuell schaltbar. Beim Einschalten des Vakuumventils ist der Greifer 9 aktiviert und ergreift und hält ein Produkt 2, bis er durch Ausschalten des Ventils deaktiviert wird. Die kreisförmige Umlaufbahn 10 der Greifer 9 tangiert die Längsmittellinie des Bandes 1 an einer ersten Übergabestelle 11. Die. Teilung T₁ zwischen den Greifern 9 ist gleich der Teilung T der Produkte 2 auf dem Band 1. Die Umlaufgeschwindigkeiten des Bandes 1 und der Greifer 9 sind gleich.

Unterhalb der Greifer 9 ist die horizontale Ebene der Umlaufbahn 15 eines Speichers 16 angedeutet. Der Speicher 16 umfasst ein Gleitblech 17 mit einem die Umlaufbahn 15 bildenden Schlitz 18. Unterhalb des Schlitzes 18 läuft eine nicht dargestellte Kette oder ein Zahnriemen um. An der Kette sind mit einer regelmässigen zweiten Teilung T₂ Mitnehmer 19 befestigt. Die Teilung T₂ ist kleiner als die Teilung T₁. Über einen Pufferbereich 20 verläuft die Bahn 15 senkrecht unterhalb der Bahn 10, also ebenfalls in einem Kreisbogen.

An einer zweiten Übergabestelle 25 verlaufen zwei parallele Förderbänder 26 eines Ausgangsförderers 27 beidseits des Schlitzes 18 von einer Umlenkrolle unterhalb des Gleitblechs 17 geneigt schräg nach oben. Sie heben bei der Übergabestelle 25 die Produkte 2 vom Gleitblech 17 ab bis oberhalb der Oberkante der Mitnehmer 19, so dass diese längs der Bahn 15 zurück zum stromaufwärtigen Ende des Bereichs 20 geführt werden.

Im Normalbetrieb arbeitet die Vorrichtung wie folgt: An der Übergabestelle 11 treffen jeweils ein Greifer 9 und ein Produkt 2 gleichzeitig ein. Der Greifer 9 wird abgesenkt und das Vakuum eingeschaltet, so dass das Produkt 2 ergriffen und in die obere Stellung des Greifers 9 angehoben wird. Beim Weiterdrehen des Rotors 5 wird der Greifer 9 um 90° gedreht. Im Bereich 20 wird der Greifer beim Erreichen des stromabwärtigsten noch leeren Fachs 28 zwischen zwei Mitnehmern 19 abgesenkt und das Vakuum ausgeschaltet, so dass das Produkt 2 auf die Platte 17 fällt und vom nächsten Mitnehmer 19 mitgenommen wird. Die Umlaufgeschwindigkeit der Mitnehmer 19 ist mit jener der Greifer 9 so synchronisiert, dass dies im z.B. letzten Drittel des Bereichs 20 geschieht. Die Steuerung der Absenkbewegung kann durch die Steuereinrichtung 29 erfolgen, wobei z.B. durch einen Fühler erkannt wird, ob ein Greifer 9 im Bereich zwischen der Station 11 und dem stromaufwärtigen Ende des Pufferbereichs 20 beladen ist oder nicht, z.B. durch einen Vakuumschalter, und mit diesem Signal das Absenken des nächstfolgenden Greifers 9 entsprechend verzögert wird. Es kann aber auch ein Fühler zum Erkennen des hintersten gefüllten Faches 28 an jedem Greifer 9 angebracht sein. Die räumliche Lage der Absenkbewegung, also der Drehwinkel des Rotors 5 zwischen dem Durchlaufen eines Greifers 9 bei der Station 11 und seiner Absenkbewegung kann zur Synchronisation des Bandes 1 und der Greifer 9 mit der Umlaufgeschwindigkeit der Mitnehmer 19 oder umgekehrt verwendet werden.

Werden plötzlich mehr Produkte auf dem Band 1 zugeführt, füllt sich der Pufferbereich des Speichers 16. Dadurch verschiebt sich die Übergabestelle von der Karusselleinrichtung 3 an den Speicher 16 im Pufferbereich 20 stromaufwärts. Der Speicher 16 wird also in dieser Phase gefüllt. Werden plötzlich weniger Produkte 2 auf dem Band 2 zugeführt, verschiebt sich die Übergabestelle wieder stromabwärts. Im Normalbetrieb bleibt die Übergabestelle an Ort.

In der Regel werden mehrere der beschriebenen Vorrichtungen parallel nebeneinander betrieben. Falls einer der damit belieferten Maschinen einen Unterbruch hat, wird der zugehörige Speicher 16 abgestellt. Die Karusselleinrichtung 3 kann weiterdrehen, jedoch werden die Greifer 9 an der Übergabestelle 11 nicht abgesenkt. Die Produkte 2 laufen auf dem Band 1 weiter zu einer nachgeschalteten Reservevorrichtung, die eine Reservemaschine beliefert. Mehrere der parallel operierenden Vorrichtungen beliefern dieselbe Reservevorrichtung. Der Ast (30) des Förderbandes 1 stromabwärts der Übergabestelle 11 bildet also einen zweiten Ausgangsförderer.

Alternativ dazu kann zur Speisung der Reservemaschine auch ein zweiter Ausgangsförderer 27 stromaufwärts des dargestellten Förderers 27 angeordnet werden. Bei diesem zweiten Ausgangsförderer sind die Förderbänder 26 um die Achse ihrer stromabwärtigen Umlenkrollen von einer angehobenen Normalstellung, in welcher der Ausgangsförderer 27 beliefert wird, in eine abwärtsgeneigte Stellung schwenkbar, in welcher die Reservemaschine wiederum unter Zwischenschaltung eines Sammelförderers für mehrere parallel betriebene Vorrichtungen beliefert wird.

Die beschriebene Vorrichtung hat eine effiziente Speicherfunktion sowohl zum Ausgleich von fehlenden Produkten 2 auf dem Eingangsförderer 1 als auch für Fluktuationen der Geschwindigkeit des Ausgangsförderers 27, z.B. beim Start- und Anfahrvorgang der von ihm belieferten Maschine. Sie ermöglicht die Serieschaltung einer Reservemaschine mit einer von mehreren Zweitverpackungsmaschinen, welche einen Unterbruch hat. Sie vereinigt daher mehrere Funktionen auf engstem Raum und ist dadurch kostengünstig im Betrieb.

Falls auf dem Zufuhrförderband 1 die Teilung T um einen Mittelwert schwankt, ist es zweckmässig, den Antrieb des Rotors 5 als Servomotor auszubilden und vor der Übergabestelle 11 einen Produktfühler 31 zum Erfassen der Position der Produkte 2 auf dem Band 1 anzuordnen. Läuft ein Produkt gegenüber der mittleren Teilung vor, so wird der Rotor 5 vor dem Eintreffen des betreffenden Greifers 9 an der Übergabestelle 11 entsprechend beschleunigt, damit dieser Greifer 9 das Produkt 2 etwa mittig erfasst. Nach dem Anheben des Produktes 2 wird der Rotor 5 wieder auf seinen Synchron-Drehwinkel zurückgeführt.

Alternativ dazu können auch die Arme 6 oder ein äusserer Teil davon um vertikale Achsen schwenkbar am Rotor 5 befestigt sein. Der Schwenkwinkel wird durch je einen separaten Aktuator gesteuert, womit der gleiche Effekt erzielt werden kann.

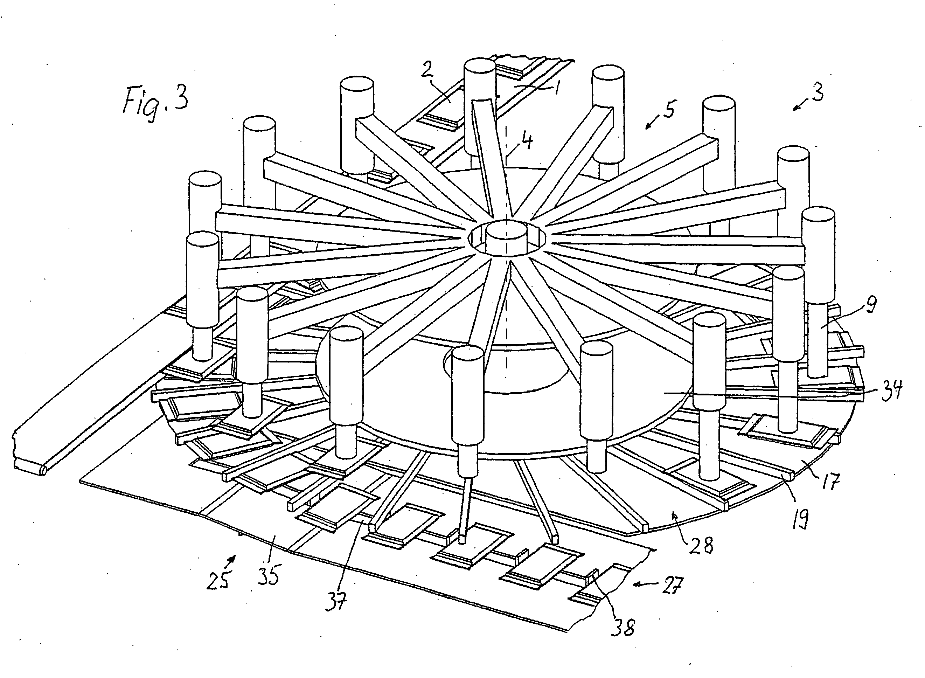

Bei der Ausführungsform nach Fig. 3 sind analoge Teile mit gleichen Bezugszeichen versehen, so dass sich eine detaillierte Beschreibung dieser Teile erübrigt. Bei dieser Ausführungsform sind die Mitnehmer 19 als Speichen eines zweiten Rotors 34 ausgebildet, die oberhalb des Gleitblechs 17 und koaxial zur Achse 3 und unterhalb dem Förderband 1 umlaufen. Das Gleitblech 17 geht an der Übergabestelle 25 in eine nach unten geneigte Rampe 35 über. In dieser Rampe und dem anschliessenden horizontalen Gleitblech 36 verläuft ein Längsschlitz 37, durch welchen umlaufende Mitnehmer 38 des Ausgangsförderers 27 ragen.

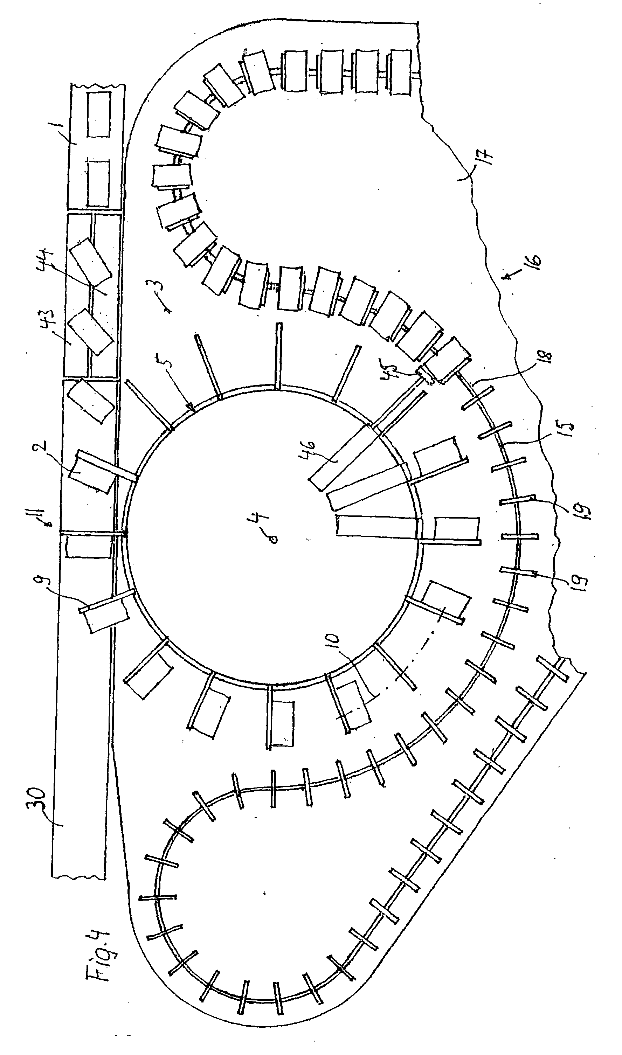

Bei der Ausführungsform nach Fig. 4 ist die Oberfläche des Gleitblechs 17 knapp unterhalb der Oberseite des Förderbandes 1. An das Eingangsförderband 1 schliessen zwei parallele Förderbänder 43, 44 an. Das äussere Förderband 43 läuft schneller, das innere Förderband 44 langsamer als das Eingangsförderband 1. Dadurch werden die Produkte 2 auf den Förderbändern 43, 44 um etwa 50° im Gegenuhrzeigersinn gedreht. An die Förderbänder 43, 44 schliesst das auch als Ausgangsförderband dienende Förderband 30 an.

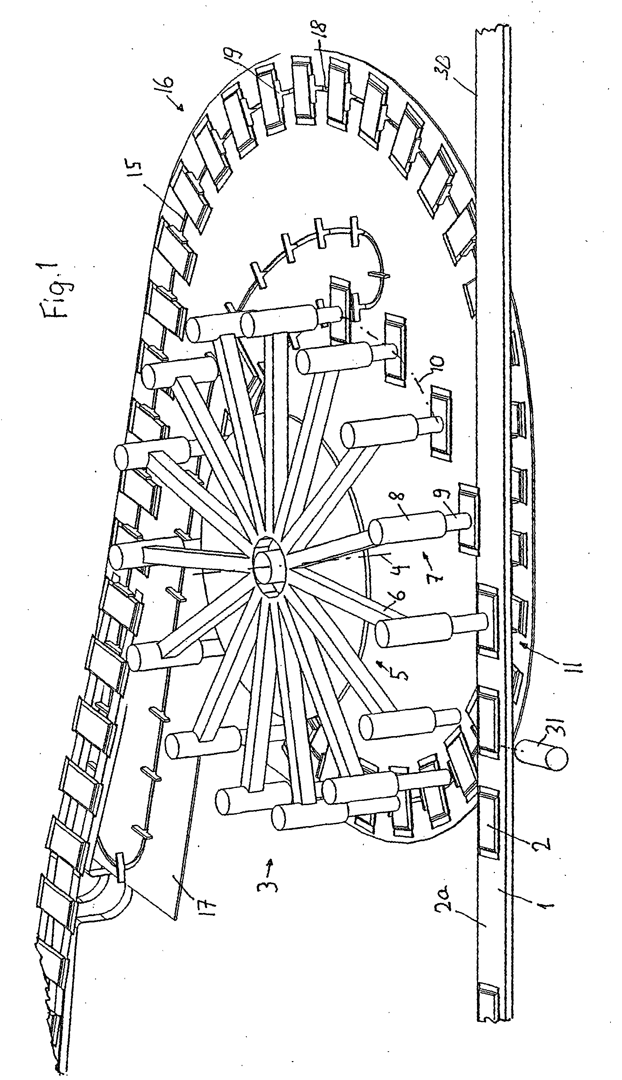

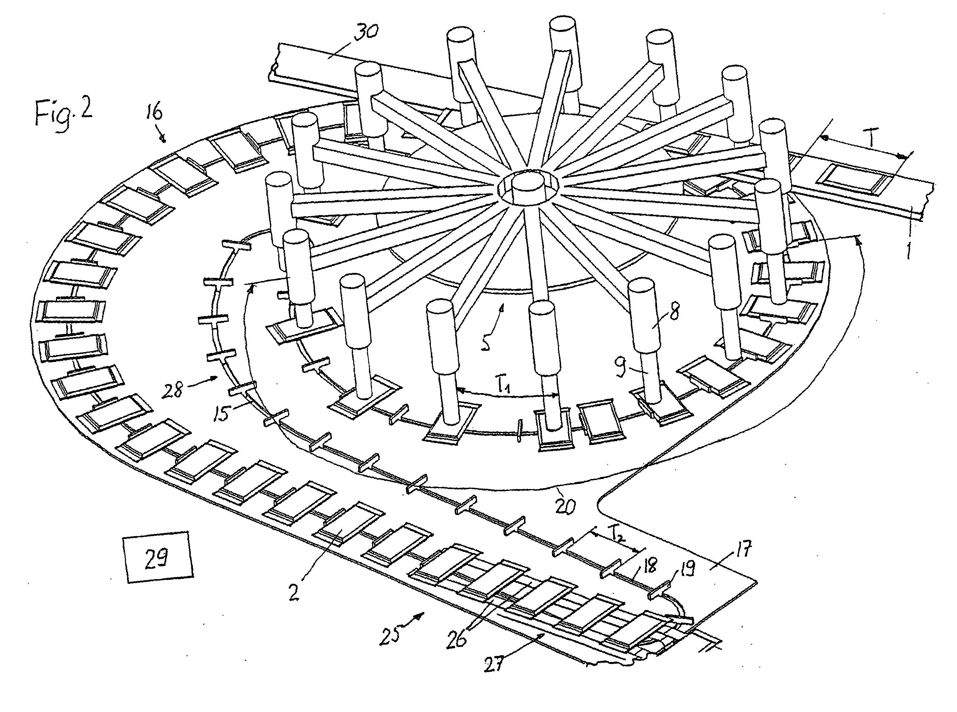

Die Greifer 9 sind in diesem Fall radial vom Rotor 5 abstehende, stabförmige Mitnehmer, welche die Produkte 2 vom Band 30 auf das Gleitblech 17 ausschieben. Jedem Mitnehmer 9 ist ein Stössel 45 zugeordnet, der durch je einen Aktuator 46, z.B. einem Pneumatikzylinder, betätigt wird zur Übergabe der Produkte 2 auf den Speicher 16 in analoger Weise wie bei der Ausführungsform nach Fig. 1 und 2 beschrieben.

Der Speicher 16 ist in diesem Fall gleichzeitig der Ausgangsförderer, der direkt die angeschlossene Zweit-Verpackungsmaschine beliefert. Die Umlaufbahn 15 des Speichers 16 verläuft über etwa 180° parallel (konzentrisch) zur und unterhalb der Umlaufbahn 10 der Greifer 9. Diese Variante ist toleranter gegenüber Schwankungen der Teilung T der Produkte 2 auf dem Band 1, weil wegen des Vordrehens der Produkte 2 die Zwischenräume zwischen ihnen an der Übergabestelle 11 grösser sind als bei den vorher beschriebenen Ausführungsformen.

Bei Unterbruch der mit dem Speicher 16 belieferten Maschine wird der Speicher 16 stillgelegt und der Rotor 5 um mindestens die Höhe der Produkte 2 angehoben. Die Produkte 2 werden dann unterhalb des Rotors hindurch mit dem Förderband 30 zur Reservemaschine geleitet. Die Förderbänder 43, 44 werden in diesem Fall zweckmässig mit gleicher Geschwindigkeit angetrieben.

## Patentansprüche

1. Vorrichtung zum Fördern und Zwischenspeichern von Produkten (2), insbesondere von Schokoladeriegeln, umfassend:
- einen Eingangsförderer (1),
- eine Karusselleinrichtung, in welcher Greifer (9) über eine geschlossene erste Umlaufbahn (10) umlaufen, wobei die Greifer (9) einzeln zwischen einem ersten Zustand, in welchem sie die Produkte (2) erfassen und mitnehmen, in einen zweiten Zustand schaltbar sind, in welcher sie die Produkte (2) von den Greifern (9) lösen, wobei in einer ersten Übergabestelle (11) die Greifer (9) oberhalb dem Eingangsförderer (1) durchlaufen und in der ersten Übergabestelle (11) im ersten Zustand sind oder in den ersten Zustand geschaltet werden und die auf dem Eingangsförderer (1) angelieferten Produkte (2) erfassen und mitnehmen und wobei die Greifer (9) zumindest ausserhalb des Bereichs der ersten Übergabestelle (11) eine regelmässige erste Teilung (T₁) haben, **dadurch gekennzeichnet daß** vorgsehen sind:
- eine Speicher (16) mit in regelmässiger zweiter Teilung (T₂) in einer geschlossenen zweiten Umlaufbahn (15) umlaufenden Mitnehmern (19), wobei die zweite Umlaufbahn (15) über einen Pufferbereich (20) parallel zur ersten Umlaufbahn (11) verläuft und die Greifer (9) innerhalb des Pufferbereichs (20) in ihren zweiten Zustand schaltbar sind, und wobei die Umlaufgeschwindigkeit der Greifer (9) grösser ist als die Umlaufgeschwindigkeit der Mitnehmer (19), und
- eine Steuereinrichtung (29), welche die Schaltung der Greifer (9) in den zweiten Zustand derart steuert, dass jedes Speicherfach (28) zwischen benachbarten Mitnehmern (19) stromabwärts des Pufferbereichs (20) ein Produkt (2) enthält.

2. Vorrichtung nach Anspruch 1, wobei die zweite Umlaufbahn (15) längs des Pufferbereichs (20) unterhalb der ersten Umlaufbahn (11) angeordnet ist.

3. Vorrichtung nach Anspruch 1 oder 2, wobei die Karusselleinrichtung (3) kreisförmig oder oval ausgebildet ist.

4. Vorrichtung nach einem der Ansprüche 1 bis 3, wobei der Speicher (16) kreisförmig ausgebildet ist und eine gemeinsame Drehachse (4) mit der Karusselleinrichtung (3) hat.

5. Vorrichtung nach einem der Ansprüche 1 bis 4, wobei sie an mindestens einen Ausgangsförderer (27, 30) angeschlossen ist.

6. Vorrichtung nach einem der Ansprüche 1 bis 5, wobei ein Eingangsförderer (1) und zwei Ausgangsförderer (27, 30) angeordnet sind, und wobei vorzugsweise der Eingangsförderer (1) in Flucht mit einem der Ausgangsförderer (30) angeordnet ist.

7. Vorrichtung nach einem der Ansprüche 1 bis 6, wobei die erste Teilung (T₁) grösser ist als die zweite Teilung (T₂).

8. Vorrichtung nach einem der Ansprüche 1 bis 7, wobei die Greifer (9) an der Karusselleinrichtung (3) als Mitnehmer ausgebildet sind.

9. Vorrichtung nach einem der Ansprüche 1 bis 8, wobei die Greifer (9) schwenkbar an der Karusselleinrichtung (3) angebracht sind.

## Claims

1. An apparatus for conveying and temporarily storing products (2), in particular chocolate bars, comprising:
- an incoming conveyor (1),
- a revolving device, in which grippers (9) circulate over a closed, first circulating path (10), said grippers (9) being individually switchable between a first state, in which they take hold of said products (2) and carry them along, into a second state, in which they release said products (2) from said grippers (9), said grippers (9), in a first transfer point (11), passing above said incoming conveyor (1) and, in said first transfer point (11), being in said first state or being switched into said first state and taking hold of said products (2) delivered on the incoming conveyor (1) and carrying them along, and said grippers (9) having a regular first spacing (T₁), at least outside a region of the first transfer point (11), **characterised in that** the apparatus comprises
- a store (16) having carriers (19) which circulate at a regular second spacing (T₂) in a closed, second circulating path (15), said second circulating path (15) running over a buffer region (20) parallel to said first circulating path (11) and said grippers (9) being switchable within said buffer region (20) into their second state, and said grippers (9) having a circulating speed being greater than a circulating speed of said carriers (19), and
- a control device (29) which controls switching of said grippers (9) into said second state in such a manner that each storage compartment (28) between adjacent carriers (19) downstream of said buffer region (20) contains a product (2).

2. The apparatus as claimed in claim 1, the second circulating path (15) being arranged along said buffer region (20) below said first circulating path (11).

3. The apparatus as claimed in claim 1 or claim 2, said revolving device (3) being of circular or oval design.

4. The apparatus as claimed in one of claims 1 to 3, said store (16) being of circular design and having a common axis of rotation (4) with said revolving device (3).

5. The apparatus as claimed in one of claims 1 to 4, said apparatus being connected to at least one outgoing conveyor (27, 30).

6. The apparatus as claimed in one of claims 1 to 5, comprising one incoming conveyor (1) and two outgoing conveyors (27, 30), and said incoming conveyor (1) preferably being arranged in alignment with one of said outgoing conveyors (30).

7. The apparatus as claimed in one of claims 1 to 6, said first spacing (T₁) being larger than said second spacing (T₂).

8. The apparatus as claimed in one of claims 1 to 7, said grippers (9) on said revolving device (3) being designed as carriers.

9. The apparatus as claimed in one of claims 1 to 8, said grippers (9) being fixed in a pivotable manner on said revolving device (3).

## Revendications

1. Dispositif pour le transport et le stockage intermédiaire de produits (2), en particulier de barres de chocolat, comprenant:
- un transporteur d'entrée (1),
- un dispositif à carrousel dans lequel des dispositifs de saisie (9) tournent sur une première piste périphérique fermée (10), les dispositifs de saisie (9) pouvant être passés individuellement d'un premier état dans lequel ils saisissent et entraînent les produits (2) jusque dans un deuxième état dans lequel ils libèrent les produits (2) des dispositifs de saisie (9), les dispositifs de saisie (9) se déplaçant au-dessus du transporteur d'entrée (1) dans un premier emplacement de transfert (11), se trouvent dans le premier état ou peuvent être passés dans le premier état dans le premier emplacement de transfert (11), et saisissent et entraînent les produits (2) délivrés sur le transporteur d'entrée (1), les dispositifs de saisie (9) présentant un premier intervalle régulier (T₁) au moins à l'extérieur de la zone du premier emplacement de transfert (11), **caractérisé en ce que** le dispositif comprend:
- une réserve (16) dotée de dispositifs d'entraînement (19) qui se déplacent à un deuxième intervalle (T₂) régulier sur une deuxième piste périphérique fermée (15), la deuxième piste périphérique (15) passant au-dessus d'une zone tampon (20) parallèlement à la première piste périphérique (11) et les dispositifs de saisie (9) pouvant être passés dans leur deuxième état à l'intérieur de la zone tampon (20), la vitesse périphérique des dispositifs de saisie (9) étant plus grande que la vitesse périphérique des dispositifs d'entraînement (19), et
- un dispositif de commande (29) qui commande le passage des dispositifs de saisie (9) dans le deuxième état de telle sorte que chaque compartiment de réserve (28) situé entre les dispositifs d'entraînement (19) voisins en aval de la zone tampon (20) contienne un produit (2).

2. Dispositif selon la revendication 1, dans lequel la deuxième piste périphérique (15) est disposée le long de la zone tampon (20) en dessous de la première piste périphérique (11).

3. Dispositif selon la revendication 1 ou 2, dans lequel le dispositif à carrousel (3) présente une configuration circulaire ou ovale.

4. Dispositif selon l'une des revendications 1 à 3, dans lequel la réserve (16) présente une configuration circulaire et possède un axe de rotation (4) commun à celui du dispositif à carrousel (3).

5. Dispositif selon l'une des revendications 1 à 4, raccordé à au moins un transporteur de sortie (27, 30).

6. Dispositif selon l'une des revendications 1 à 5, dans lequel un transporteur d'entrée (1) et deux transporteurs de sortie (27, 30) sont disposés, le transporteur d'entrée (1) étant de préférence disposé en alignement sur l'un des transporteurs de sortie (30).

7. Dispositif selon l'une des revendications 1 à 6, dans lequel le premier intervalle (T₁) est plus grand que le deuxième intervalle (T₂).

8. Dispositif selon l'une des revendications 1 à 7, dans lequel les dispositifs de saisie (9) prévus sur le dispositif à carrousel (3) sont configurés comme dispositifs d'entraînement.

9. Dispositif selon l'une des revendications 1 à 8, dans lequel les dispositifs de saisie (9) sont installés à pivotement sur le dispositif à carrousel (3).
